Europäisches Patentamt

European Patent Office

Office européen des brevets

(11) Publication number: **0 266 073 B1**

# EUROPEAN PATENT SPECIFICATION

(45) Date of publication of patent specification: **29.04.92**  (51) Int. Cl.⁵: **B23K 20/18**

(21) Application number: **87308774.6**

(22) Date of filing: **02.10.87**

(54) Stopoff materials for use in the production of diffusion bonded superplastically formed structures.

(30) Priority: **02.10.86 GB 8623719**

(43) Date of publication of application:
**04.05.88 Bulletin 88/18**

(45) Publication of the grant of the patent:
**29.04.92 Bulletin 92/18**

(84) Designated Contracting States:
**DE ES FR GB IT SE**

(56) References cited:
**US-A- 4 220 276**
**US-A- 4 530 197**

(73) Proprietor: **BRITISH AEROSPACE PUBLIC LIMITED COMPANY**
**11 Strand**
**London WC2N 5JT(GB)**

(72) Inventor: **Kitson, I.**
**British Aerospace PLC Samlesbury Aerodrome**
**Balderstone Lancs BB2 7LF(GB)**
Inventor: **Leaver, I.**
**British Aerospace PLC Samlesbury Aerodrome**
**Balderstone Lancs BB2 7LF(GB)**
Inventor: **Gardiner, P. D.**
**British Aerospace PLC Strand Road**
**Preston Lancs PR1 8UD(GB)**

(74) Representative: **Eastmond, John et al**
**British Aerospace plc Corporate IPR Department, Headquarters P.O. Box 87 Building O191 Royal Aerospace Establishment Farnborough Hants GU14 6YU(GB)**

**Description**

This invention relates to methods of producing diffusion bonded superplastically formed structures and to Stopoff materials used in such methods to select areas at which metal blanks are not to be joined by diffusion bonding.

Production methods, for the fabrication of structures in which metal blanks, preferably of a titanium alloy, are joined at selected areas by diffusion bonding at elevated temperatures and pressures and then subjected to superplastic expansion to form a desired structure, are well known and are used particularly in the aircraft industry where complicated high strength light weight structures are required. In the known methods the metal blanks are first treated at selected areas with a Stopoff material, such as yttria, boron nitride, graphite, or alumina, to prevent bonding at those areas during the diffusion bonding process. During super plastic forming the metal blanks are expanded at the treated (unbonded) areas into contact with shaping moulds by means of high pressure inert gas to form an expanded structure of the desired shape. The formed structure may be of a honeycomb sandwich form or an integrally stiffened structure.

The Stopoff material is applied to the metal blanks, in the known methods, by spraying or silk screen printing processes. The best known Stopoff material is yttrium oxide (yttria) in an acrylic molding powder (see i.e. U.S. Patent No.4,220,276). This compound has variable screen printing capabilities and a short shelf life due to the settlement of yttrium oxide particles and gelling of the resin systems.

It is an object of the present invention to provide a superior Stopoff material with improved screen printing capabilities and longer shelf life and a method of using said material.

The present invention consists of a method of manufacturing a stopoff material characterised in that the method comprises the steps of:-

mixing yttria and an acrylic binder in a ratio of between 2:1 and 4:1,;

adding an organic solvent to the mixture of yttria and binder in the ratio 600 ml solvent : 1,500g yttria;

adding an anti-coagulent to the mixture of yttria, binder and solvent in the ratio 45g anti-coagulent:600 ml solvent;

grinding the mixture of yttria, binder, solvent and anti-coagulent in a ball mill for 6 hours;

if a normal "clanking-sound" is not heard within 5 minutes of commencing the ball milling, adding aliquots of 10 ml of solvent until noise is achieved;

measuring and adjusting the viscosity of the mixture to give a reading of 25-40 seconds in Zahn 5 viscosity cup;

monitoring the particle size of each batch with a grind gauge; and,

decanting the mixture after grinding.

Preferably, where the Stopoff material is to be applied by brush, the thermo plastic acrylic polymer is Synacryl 9122X which may be obtained from CVP Cray Valley Products Limited Farnborough Kent BR6 7EA. Synacryl 9122X has been used in the ceramic industry for temporary binders, decorative inks and cover coats. It may also be used in specialised air drawing and stoving finishes.

Preferably the decanted mixture is stored in clean glass bottles which are securely sealed.

Preferably said bottles and mixture are stored in a cool place.

Preferably, for screen printing Stopoff materials, the Thermo plastic acrylic polymer is Synacryl 9123S which may also be obtained from CVP.

The anti coagulant material may be selected from a number of proprietary products on the market such as Crayvallac MT. The shelf life of the Stopoff material can be increased from a matter of days to typically three to six months using such an additive.

Preferably the method of using said material includes spraying or screen printing the material on to the surfaces of parts to be bonded followed by force-drying of the material to speed-up the curing process.

The Stopoff materials according to the invention are not limited in application to the diffusion bonding of titanium but may have applications with regards to the diffusion bonding of other metal alloys eg aluminium and may indeed have applications in other bonding processes such as rollbonding.

One Stopoff material and a method of use of same according to the invention will now be described by way of example only.

A Stopoff mixture was made using the following ingredients

(1) 1,500g yttria (99.99%) ) ie, 2.5:1 Yttria to acrylic binder

(b) 600g resin (synacryl 9123S) )

(c) 600mls of solvent (Butyl cellosolve -acetate)

(d) 45g crayvallac MT (anti-coagulant)

The above mix is ground in a ball-mill for six hours to ensure adequate wetting of the mixing of all the components. If the normal "clanking-sound" is not heard within five minutes, further aliquots of 10mls of solvent are added until noise is achieved. The viscosity of the mix is measured and adjusted as necessary to give a reading of 25 - 40 seconds in Zahn 5 viscosity cup. The particle size of each batch is also monitored with a grind gauge.

The mixture is then decanted into clean glass bottles sealed securely and stored in a cool place. The viscosity is rechecked and adjusted as required prior to screen printing.

It is recommended that all mixes additions and readings are monitored and recorded on appropriate forms and that the balance and viscosity cup are calibrated every six months.

In use the mixture is screen printed on to parts to be diffusion bonded to form a pattern of areas at which bonding is not required. The screen printed parts are then force-dried e.g. by heated air dryers to effect rapid curing of the mixture. Without this step in the process the Stopoff material exhibits inferior bond prevention properties.

Tests have been carried out to determine whether Synacryl 9123S and Crayvallac MT when used in a Stopoff material are detrimental to components to be diffusion bonded/super plastically formed. The test component material was titanium and two Stopoff mixtures were used in comparative tests with conventional Stopoff, ie,

(1) Mixture 1: 300g Yttrium oxide, 120g synacryl 9123S (ie, 2.5:1 Yttria to Acrylic binder) and 80mls Butyl cellosolve acetate

(2) Mixture 2: Yttrium oxide 200g, 80g synarcryl 9123S, (ie, 2.5:1 Yttria to Acrylic binder) 50mls butyl cellosolve acetate, 2gms Crayvallac MT 2gms.

The above Stopoffs and a conventional Stopoff material were each applied to a 12 inch square panel of Titanium so that the centre of the panel would remain unbonded in a diffusion bonding process. These panels were then diffusion bonded into similar panels. Two untreated panels were bonded together as a standard. These test pieces were then tested as follows:-

(a) Hydrogen levels

(b) Tensile Strength

(c) Contamination using a scanning an electron microscope

(d) Alpha case contamination.

The results were as follows

(a) Hydrogen levels

(1) Mixture 1 53.7 ppm

(2) Mixture 2 55.6 ppm

(3) Standard Stopoff material 52.4 ppm

(4) Standard test panel 50.2 ppm

(b) Tensile Strength (The TA10 specification is given for comparison)

|  | Mixture Test | | | TA10 Spec |
|---|---|---|---|---|
|  | 1. | 2. | Standard |  |
| 2%<br>Ultimate<br>Elongation | 915<br>960.5<br>11.5% | 912.2<br>970.7<br>11.5% | 910.5<br>978.5<br>13.25% | 900 Minimum<br>960 - 1270<br>8% |

(c) Contamination Using Scanning Electron Microscope

All Stopoff test panels showed Yttrium oxide as the only contaminant.

It can be seen from the above test results that Synacaryl 9123S and Crayvallac MT when used in a Stopoff material produce results which are no worse than those obtained with conventional Stopoff. As a result of the tests it is recommended that the optimum mixture of Stopoff material with improved shelf life and screen printing capabilities is as follows:-

Yttrium Oxide 1500g ) IE, 2.5:1 Yttria to Acrylic binder

Synacryl 9123S 600g )
Butyl Cellosolve acetate 600mls
Crayvallac MT 45gms

As described in the example given above, the mixture should be milled in a large steel ball mill with a change of balls which occupies from 1/3 to 1/2 of the total volume of the mill from six to eight hours. The grind time, particle size, viscosity and other relevant details should be recorded on a batch card and the vessel in which the Stopoff material is stored should be identified with the date of manufacture and the mix number. The material should be stored in a cool place but not in a fridge.

**Claims**

1. A method of manufacturing a stopoff material characterised in that the method comprises the steps of:-
   mixing yttria and an acrylic binder in a ratio of between 2:1 and 4:1,;
   adding an organic solvent to the mixture of yttria and binder in the ratio 600 ml solvent : 1,500g yttria;
   adding an anti-coagulent to the mixture of yttria, binder and solvent in the ratio 45g anti-coagulent:600 mil solvent;
   grinding the mixture of yttria, binder, solvent and anti-coagulent in a ball mill for 6 hours;
   if a normal "clanking-sound" is not heard within 5 minutes of commencing the ball milling, adding of aliquots of 10 ml of solvent until noise is achieved;
   measuring and adjusting the viscosity of the mixture to give a reading of 25-40 seconds in Zahn 5 viscosity cup;
   monitoring the particle size of each batch with a grind gauge; and,
   decanting the mixture after grinding.

**Revendications**

1. Procédé de fabrication d'un matériau à masquer, caractérisé en ce que le procédé comprend les étapes consistant à :
   - mélanger de l'yttria et un liant acrylique dans un rapport compris entre 2:1 et 4:1;
   - ajouter un solvant organique au mélange d'yttria et de liant dans un rapport 600 ml de solvant : 1 500 g d'yttria;
   - ajouter un anti-coagulant au mélange d'yttria, de liant et de solvant dans le rapport : 45 g d'anti-coagulant : 600 ml de solvant;
   - broyer le mélange d'yttria, de liant, de solvant et d'anti-coagulant dans un moulin à billes pendant une durée de 6 heures;
   - dans le cas où l'on n'entend pas un "bruit métallique" normal moins de 5 minutes après le commencement du broyage par les billes, ajouter des quantités aliquotes de 10 ml de solvant jusqu'à l'obtention du bruit;
   - mesurer et ajuster la viscosité du mélange pour obtenir une lecture de 25-40 secondes dans un viscosimètre à coupelle Zahn 5;
   - surveiller le diamètre des particules de chaque lot avec une jauge de broyage; et
   - décanter le mélange après le broyage.

**Patentansprüche**

1. Verfahren zur Herstellung eines Trennmaterials, dadurch gekennzeichnet, daß das Verfahren die folgenden Schritte umfaßt:
   es wird Ytteroxyd mit einem Acrylbinder im Verhältnis zwischen 2:1 und 4:1 gemischt;
   es wird ein organisches Lösungsmittel der Mischung von Ytteroxyd und Binder im Verhältnis 600 ml Lösungsmittel:1500g Ytteroxyd hinzugefügt;
   es wird ein Anti-Koagulierungmittel der Mischung von Ytteroxyd, Binder und Lösungsmittel im Verhältnis 45g Anti-Koagulierungsmittel:600 ml Lösungsmittel hinzugefügt;
   es wird die Mischung von Ytteroxyd, Binder, Lösungsmittel und Anti-Koagulierungsmittel in einer Kugelmühle 6 Stunden gemahlen;
   wenn kein normales 'Klirrgeräusch' innerhalb von 5 min nach Beginn der Kugelvermahlung hörbar ist, werden Teilmengen von 10 ml Lösungsmittel zugesetzt, bis das Geräusch auftritt;
   es wird die Viskosität der Mischung gemessen und eingestellt bis sich eine Ablesung von 25-40

4

EP 0 266 073 B1

Sekunden in einer Zahn-5-Viskositätsschale ergibt;

es wird die Partikelgröße jeder Charge mit einem Vermahlungs-Meßgerät überwacht; und

es wird die Mischung nach der Vermahlung dekantiert.

5